# EUROPEAN PATENT APPLICATION

(11) **EP 4 474 682 A1**
(43) Date of publication of application: **11.12.2024**
(21) Application number: 24173172.8
(22) Date of filing: 29.04.2024
(51) Int. Cl.: F16K 11/078, F16K 25/00

(54) **SLIDE SWITCH VALVE CORE**

(30) Priority: 05.06.2023 CN 202321408281 U
(71) Applicant: Taizhou Fenghua Brassworks Co., Ltd., Yuhuan, Zhejiang 317604 (CN)
(72) Inventor: HE, Zu'an, Yuhuan Zhejiang 317604 (CN); SU, Mingye, Yuhuan Zhejiang 317604 (CN)
(74) Representative: Elzaburu S.L.P.

(57) **Abstract**

The present invention provides a slide switch valve core, and belongs to the technical field of valves. The slide switch valve core solves a problem of a poor sealing performance of side water feeding of an existing slide switch valve. The slide switch valve core includes a valve rod, a barrel, and a movable ceramic chip and a static ceramic chip which are arranged in the barrel in an up-down jointing manner. A first water passage hole is formed in a bottom of the barrel. A second water passage hole is formed in a side of the barrel. The valve rod is capable of driving the movable ceramic chip to slide relative to the static ceramic chip and enable the first water passage hole to communicate with the second water passage hole. An annular guiding element which is capable of moving axially is further radially fixed in the barrel, is located at an upper part of the movable ceramic chip, and is capable of guiding the movable ceramic chip to slide relative to the static ceramic chip. A sealing element is arranged between a lower end of the static ceramic chip and the barrel. An elastic element is arranged between an upper end of the guiding element and the barrel. The slide switch valve core can ensure the sealing performance of both bottom water feeding and side water feeding, and has an advantage of a wide range of applications.

## Description

### Technical field

The present invention belongs to the technical field of valves, and relates to a slide switch valve core.

### Background

A valve is a control component in a fluid transportation system, with functions of cutoff, regulation, flow guide, backflow prevention, pressure stabilization, shunt or overflow pressure relief, etc. According to different structures of valves, the valves can be divided into ball valves, gate valves, globe valves, etc.

An existing slide switch valve core (for example, the patent document with Publication No. EP2549156A1) generally includes a barrel, a valve rod, a movable ceramic chip, a static ceramic chip and other structures. An inlet is formed in a bottom of the barrel. An outlet is formed in a side of the barrel. A swing of the valve rod relative to the barrel drives the movable ceramic chip to slide relative to the static ceramic chip so as to change an opening degree of the valve, and then realize the flow regulation and control operations of opening and closing of the valve.

However, in the existing slide switch valve core, a sealing ring is arranged in the inlet in the bottom of the barrel, and the static ceramic chip is located above the sealing ring, resulting in that water can only be fed from the bottom of the barrel and discharged from the side of the barrel. Because if water feeding and discharging connections are reversed, i.e., water is fed from the side of the barrel and discharged from the bottom of the barrel, as the sealing ring can be compressed and deformed, the static ceramic chip in the barrel will be subjected to axial displacement towards the bottom of the barrel under the action of a water pressure, resulting in failure of sealing between the static ceramic chip and the movable ceramic chip, and the slide switch valve core cannot be used normally. In addition, when the water pressure is large, it is also prone to make a downward movement amount of the static ceramic chip large, resulting in excessive compression and deformation of the sealing ring, causing sealing failure of the sealing ring. In order to ensure the sealing performance of the slide switch valve core, a support skeleton is usually arranged in a bottom sealing ring to reduce the deformation of the bottom sealing ring.

### Summary

The objective of the present invention is to propose a slide switch valve core in response to the above problems existing in the prior art, and a problem of a poor sealing performance of side water feeding of an existing slide switch valve is solved.

The objective of the present invention can be achieved by the following technical solution.

In one embodiment of a slide switch valve core, comprising: a valve rod, a barrel, and a movable ceramic chip and a static ceramic chip which are arranged in the barrel in an up-down jointing manner, a first water passage hole is formed in a bottom of the barrel, a second water passage hole is formed in a side of the barrel, and the valve rod is capable of driving the movable ceramic chip to slide relative to the static ceramic chip and enable the first water passage hole to communicate with the second water passage hole; and the slide switch valve core is characterized in that an annular guiding element which is capable of moving axially is further radially fixed in the barrel, is located at an upper part of the movable ceramic chip, and is capable of guiding the movable ceramic chip to slide relative to the static ceramic chip, a sealing element is arranged between a lower end of the static ceramic chip and the barrel, and at least one elastic element is arranged between an upper end of the guiding element and the barrel.

When the slide switch valve core is connected, one of the first water passage hole and the second water passage hole is selected as an inlet and the other as an outlet according to actual needs. During use, the valve rod is operated to drive the movable ceramic chip to slide relative to the static ceramic chip, thereby changing a communication state between the first water passage hole and the second water passage hole and a flowable area, and realizing the use of the valve. In a use process of the slide switch valve core, when a water pressure is unchanged, or when the slide switch valve core is not mounted in a tap, the static ceramic chip remains stationary in relation to the barrel, the guiding element and the barrel are radially positioned, and the guiding element does not move radially relative to the barrel. Thus, in a use process of the valve rod, only the movable ceramic chip slides between the guiding element and the static ceramic chip. Relying on the action of the elasticity of the elastic element itself, the guiding element, the movable ceramic chip and the static ceramic chip are axially close abutted against the sealing element. After the slide switch valve core is mounted in the tap, when water passes through the tap, if the first water passage hole is used as the inlet, the static ceramic chip and the movable ceramic chip are subjected to the action of an upward water pressure. Because the guiding element can move axially, the guiding element is forced to move upward to make the elastic element further compressed to increase the elasticity, thus limiting a movement amount of the guiding element. Under the joint action of the water pressure and the elastic element, the movable ceramic chip and the static ceramic chip are kept close abutted, while a small upward movement amount does not affect the sealing performance at the sealing element. If the second water passage hole is used as the inlet, the static ceramic chip moves downward under the action of a downward water pressure. Sealing at the sealing element is tighter. At the same time, under the action of the elasticity of the elastic element, the guiding element and the movable ceramic chip move downward along with the static ceramic chip, and the movable ceramic chip and the static ceramic chip are made to keep close abutted. Therefore, by using the guiding element which is capable of moving axially, and the elastic element which is arranged between an upper end of the guiding element and the barrel, so that no matter which of the first water passage hole and the second water passage hole is used as the inlet, in a case of a small extent of axial fluctuation of the guiding element, the static ceramic chip and the static ceramic chip under the action of the water pressure, relying on matching of the guiding element capable of moving axially with the action of the elasticity of the elastic element itself as well as characteristics of compressibility and expansion of a material of the sealing element itself, close abutting of the guiding element, the movable ceramic chip and the static ceramic chip can be ensured, the sealing performance between the movable ceramic chip and the static ceramic chip is ensured, sealing between the lower end of the static ceramic chip and the barrel is realized through the sealing element, so as to provide a sealing guarantee for any one of the first water passage hole and the second water passage hole as the inlet, and thus the slide switch valve core can freely select the inlet and the outlet according to needs, thereby being wide in range of applications.

In one embodiment of the above slide switch valve core, the at least one elastic element is arranged as a ring in a circumferential direction of the guiding element, an annular concave mounting groove is formed in a top surface of the guiding element, the at least one elastic element is located in the mounting groove, and a top of the at least one elastic element extends out of the mounting groove. This can make the guiding element stressed circumferentially uniformly, and axial movement is stable and accurate, so as to ensure the sealing performance between the movable ceramic chip and the static ceramic chip. The mounting groove has a positioning effect, so that the elastic element does not shift in the use process of the slide switch valve core, thus generating stable elasticity on the guiding element, which is conducive to ensuring the sealing performance of a slide switch valve.

In another embodiment, a plurality of elastic elements are uniformly arrayed in a circumferential direction of the guiding element, a plurality of mounting holes which are uniformly arrayed in the circumferential direction of the guiding element are formed in a top surface of the guiding element, the elastic elements are located in the mounting holes in a one-to-one correspondence manner, and tops of the elastic elements extend out of the mounting holes. This can make the guiding element stressed circumferentially uniformly, and axial movement is stable and accurate, so as to ensure the sealing performance between the movable ceramic chip and the static ceramic chip. The mounting holes have a positioning effect, so that the elastic elements do not shift in the use process of the slide switch valve core, thus generating stable elasticity on the guiding element, which is conducive to ensuring the sealing performance of the slide switch valve.

In one embodiment of the above slide switch valve core, the at least one elastic element is an elastic sealing ring or a rubber block or a spring. The elastic sealing ring, rubber block and spring can all generate stable elasticity, which is conducive to making the movable ceramic chip and the static ceramic chip stably abutted to maintain the sealing performance.

In one embodiment of the above slide switch valve core, an annular metal gasket is further arranged in the barrel, a top end of the metal gasket is abutted against an inner wall of the barrel, and a top of the at least one elastic element is abutted against a bottom end of the metal gasket. The metal gasket provides support for the elastic element, so that the elastic element is mounted stably to ensure that elasticity formed by the elastic element acts on the guiding element, thus the guiding element can move axially instantly, and the static ceramic chip and the movable ceramic chip are kept close abutted to ensure the sealing performance of the slide switch valve core.

In one embodiment of the above slide switch valve core, at least one limiting groove which is recessed and elongated is formed in the inner wall of the barrel, a length of the at least one limiting groove is set in an axial direction of the barrel, at least one convex limiting block is arranged on an outer side of the guiding element, and the at least one limiting block extends into the at least one limiting groove and is capable of sliding in the at least one limiting groove. The matching of the elongated limiting groove and the limiting block not only makes it easy to mount the guiding element in the barrel, but also has a stable guiding and limiting effect on the upward and downward movement of the guiding element, so that no matter which of the first water passage hole and second water passage hole is used as the inlet, the guiding element can move axially instantly and accurately, and thus the movable ceramic chip and the static ceramic chip are kept close abutted to ensure the sealing performance.

In one embodiment of the above slide switch valve core, at least one protruding convex block is arranged on an outer side of the static ceramic chip, extends into the at least one limiting groove and is capable of sliding in the at least one limiting groove. The convex block and the limiting block are guided and limited through the same limiting groove, the static ceramic chip and the guiding element can maintain accurate axial sliding while the static ceramic chip is fixed to the barrel in a circumferential direction through matching of the convex block and the limiting groove, and thus in a process of the valve rod driving the movable ceramic chip to move, the guiding element and the static ceramic chip are both kept circumferentially stationary, but also can move axially with the change of axial force, so that the movable ceramic chip and the static ceramic chip can be kept close abutted to provide a guarantee to ensure the sealing effect of the slide switch valve core.

In one embodiment of the above slide switch valve core, the barrel includes a main body and a base which are both tubular shaped and coaxially arranged, a top end of the base is sleeved on an outer side of a bottom end of the main body, a convex annular blocking part is arranged on an inner side surface of the base, an end surface of the bottom end of the main body is capable of being abutted against an end surface of the blocking part, and the sealing element is arranged between the static ceramic chip and the blocking part. The barrel is formed by connecting the main body and the base, and the bottom end of the main body is abutted against the blocking part of the base, which can avoid external force other than the water pressure acting on internal structures such as the static ceramic chip and the movable ceramic chip. The sealing element is arranged between the static ceramic chip and the blocking part, so that the sealing performance can be ensured. The blocking part has an axial limiting effect on the static ceramic chip and the sealing element, which can avoid a large-extent axial movement of the static ceramic chip when the water pressure is too large, and ensure that the movable ceramic chip and the static ceramic chip can be kept close abutted through the guiding element capable of axially moving and the elastic element so as to ensure the sealing performance of the slide switch valve core.

In one embodiment of the above slide switch valve core, an annular concave clamping slot is formed in an outer side surface of the bottom end of the main body, a convex clamping part which is located above the blocking part is arranged on the inner side surface of the base, and is inserted in the clamping slot, and an axial length of the clamping part is shorter than an axial length of the clamping slot. The matching manner of the clamping part and the clamping slot enables the base to be mounted onto the main body to realize the connection without falling off, and also to be capable of moving up and down on the main body in the axial direction. When the barrel is not mounted in the tap, after the base moves downward in the axial direction, an axial space inside the barrel is increased, and the compression of the sealing element is reduced, which is conducive to prolonging the service life of the sealing element. After the barrel is mounted in the tap, the base is limited by the clamping part and the clamping slot to ensure the limiting effect of the blocking part on the static ceramic chip and the sealing performance of the slide switch valve core.

In one embodiment of the above slide switch valve core, an annular concave sealing groove is formed in an upper end surface of the blocking part, the sealing element is located in the sealing groove, and a top of the sealing element is abutted against the static ceramic chip. This can prevent the sealing element from being crushed and affecting the sealing performance.

In one embodiment of the above slide switch valve core, a bottom end of the valve rod penetrates through the metal gasket and the guiding element and acts on the movable ceramic chip, a spherical ball part is arranged at a middle part of the valve rod, and the bottom end of the valve rod and the ball part are respectively located on two sides of the metal gasket. The metal gasket is arranged at a middle part of the barrel to separate axial mechanical force of upper and lower regions, and thus the valve core is operated with a light hand feeling.

In one embodiment of the above slide switch valve core, a first ball seat and a second ball seat are both annular, are both arranged in the barrel, are both sleeved on an outer side of the valve rod, and are respectively arranged on two sides of the ball part. A space exists between an outer side of the ball part and the inner wall of the barrel, inner side surfaces of the first ball seat and the second ball seat are both abutted against the ball part, and outer side surfaces of the first ball seat and the second ball seat are both abutted against the inner wall of the barrel. The first ball seat and the second ball seat can be made of hard plastic or rubber or other materials, and the ball part and the inner wall of the barrel are separated by the first ball seat and the second ball seat, avoiding wear on an outside of the ball part caused by rigid contact between the two, which in turn affects the sealing performance.

In one embodiment of the above slide switch valve core, the first ball seat is located above the second ball seat, portions of the inner side surfaces of the first ball seat and the second ball seat facing the ball part are both spherical, and mate with an outer surface of the ball part. A convex blocking shoulder is further arranged on the inner wall of the barrel, and an abutting surface which is capable of being abutted against a lower end surface of the blocking shoulder is arranged on an outer side of the first ball seat. A lower end surface of the second ball seat is abutted against a top surface of the metal gasket, an annular sealing ring is arranged between the first ball seat and the second ball seat, and two sides of the sealing ring are respectively abutted against the first ball seat and the second ball seat. The blocking shoulder, the sealing ring and the metal gasket are arranged in the barrel from top to bottom, a gap is formed between every two for arranging the first ball seat and the second ball seat, the plurality of structures are sequentially abutted against each other, so that the stability of positions of the first ball seat and the second ball seat can be ensured to further ensure the stability in the operation process of the valve rod, and at the same time, axial large-extent fluctuation of each structure can also be avoided to ensure the sealing performance.

In one embodiment of the above slide switch valve core, a position of the second water passage hole is opposite to that of the movable ceramic chip. The impact of water flow on other parts is reduced, making the slide switch valve stable in use and ensuring the sealing performance.

In one embodiment of the above slide switch valve core, the guiding element is fixed in the barrel in a circumferential direction, two protruding guiding parts are arranged at an end of the guiding element facing the movable ceramic chip, and are located on two opposite sides of the guiding element, a sliding groove is formed between the two guiding parts, and the above movable ceramic chip is located in the sliding groove and is capable of moving back and forth along the sliding groove. The movement of the movable ceramic chip is guided by means of the two protruding guiding parts forming the sliding groove, which makes the moving direction and the moving process of the movable ceramic chip more stable.

Compared with the prior art, in this slide switch valve core, by using the guiding element which is capable of moving axially and is provided with the elastic element, regardless of whether the barrel is fed with the water from the side of or from the bottom, only causing a small extent of downward or upward axial movement of internal parts (i.e. the movable ceramic chip, the static ceramic chip and the guiding element), and making the movable ceramic chip and the static ceramic chip keep closely abutted, to ensure the sealing performance, and thus the slide switch valve core can freely select the inlet and outlet according to the needs and has a wide range of applications.

### Brief description of the drawings

Fig. 1 is a longitudinal sectional view of the slide switch valve core when not mounted in a tap body in Embodiment 1.
Fig. 2 is a three-dimensional view of a main body, a guiding element, a movable ceramic chip, and a static ceramic chip of the slide switch valve core in Embodiment 1.
Fig. 3 is a transverse sectional view at a guiding element of the slide switch valve core in Embodiment 1.
Fig. 4 is a transverse sectional view at a static ceramic chip of the slide switch valve core in Embodiment 1.
Fig. 5 is a partially enlarged view at a clamping groove and a clamping part in Fig. 1.
Fig. 6 is a three-dimensional view of the slide switch valve core in Embodiment 1.
Fig. 7 is a longitudinal sectional view of the slide switch valve core when mounted in a tap body without water passing in Embodiment 1.
Fig. 8 is a longitudinal sectional view of the slide switch valve core when mounted in a tap body with water fed from a bottom in Embodiment 1.
Fig. 9 is a longitudinal sectional view of the slide switch valve core when mounted in a tap body with water fed from a side in Embodiment 1.
Fig. 10 is a longitudinal sectional view of the slide switch valve core when not mounted in a tap body in Embodiment 2.
Fig. 11 is a longitudinal sectional view of the slide switch valve core when not mounted in a tap body in Embodiment 3.

### Detailed description

The following are specific embodiments of the present invention, technical solutions of the present invention are further described in conjunction with accompanying drawings, but the present invention is not limited to these embodiments.

### Embodiment 1

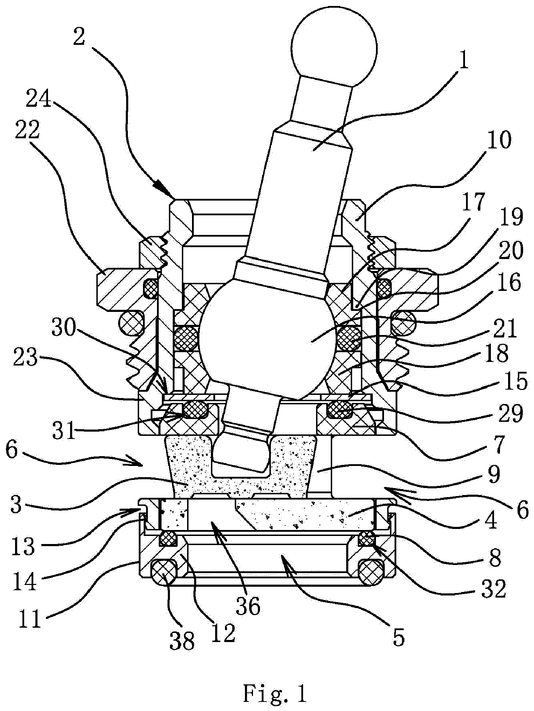

As shown in Fig. 1, a slide switch valve core includes a cylindrical barrel 2, a cylindrical-rod-shaped valve rod 1, and a movable ceramic chip 3 and a static ceramic chip 4 which are arranged adjacently and horizontally in the barrel 2. A first water passage hole 5 is formed in a bottom of the barrel 2. Two second water passage holes 6 are formed in places of a side of the barrel 2 corresponding to a position of the movable ceramic chip 3 in a penetrating manner.

A lower end of the valve rod 1 extends into the barrel 2 from a top of the barrel 2. A spherical ball part 16 is arranged at a middle part of the valve rod 1. Roughly spherical ball heads are arranged at both ends of the valve rod 1. A recessed concave hole is formed in a top of the movable ceramic chip 3. The ball head at the bottom end of the valve rod 1 extends into the concave hole. The ball part 16 is located in the barrel 2, and the ball head at the top end of the valve rod 1 is located outside the barrel 2.

A first ball seat 17, a sealing ring 21, a second ball seat 18, a metal gasket 15 and a guiding element 7 which are all annular and sleeved on an outer side of the valve rod 1 are further arranged in the barrel 2 sequentially from top to bottom, and these parts are all located above the movable ceramic chip 3. The metal gasket 15 is made of metal material, such as steel or copper alloy or aluminium alloy.

The first ball seat 17 and the second ball seat 18 are arranged on upper and lower sides of the ball part 16 respectively. A space exists between an outer side of the ball part 16 and an inner wall of the barrel 2. Portions of inner side surfaces of the first ball seat 17 and the second ball seat 18 facing the ball part 16 are both spherical, and mate with an outer surface of the ball part 16. Portions of the inner side surfaces of the first ball seat 17 and the second ball seat 18 away from the ball part 16 are both tapered surfaces which give way to facilitate swinging of the valve rod 1. In one embodiment, the first ball seat 17 and the second ball seat 18 can be made of materials such as hard plastic or rubber.

An annular convex blocking shoulder 19 is arranged on the inner wall of the barrel 2. An annular protruding convex part is arranged on an outer side of a lower end of the first ball seat 17, and an upper end surface of the convex part is an abutting surface 20 which is abutted against a lower end surface of the blocking shoulder 19. The second ball seat 18 and the first ball seat 17 are of the same structure and are symmetrically arranged. A lower end surface of the second ball seat 18 is abutted against a top surface of the metal gasket 15. The sealing ring 21 is arranged between the first ball seat 17 and the second ball seat 18, and two sides of the sealing ring 21 are respectively abutted against the first ball seat 17 and the second ball seat 18. The second ball seat 18 can move downward.

An annular step surface 30 is further arranged on the inner wall of the barrel 2. The top surface of the metal gasket 15, while being abutted against the lower end surface of the second ball seat 18, is further abutted against the step surface 30, so that the limiting of a portion above the metal gasket 15 by the barrel 2 is realized. A cylindrical matching surface is further arranged on a portion of the inner wall of the barrel 2 below the step surface 30, and is opposite to an outer side surface of the metal gasket 15. An axial height of the matching surface is greater than an axial thickness of the metal gasket 15. A diameter of the matching surface is greater than an outer diameter of the metal gasket 15. The metal gasket 15 can move downward.

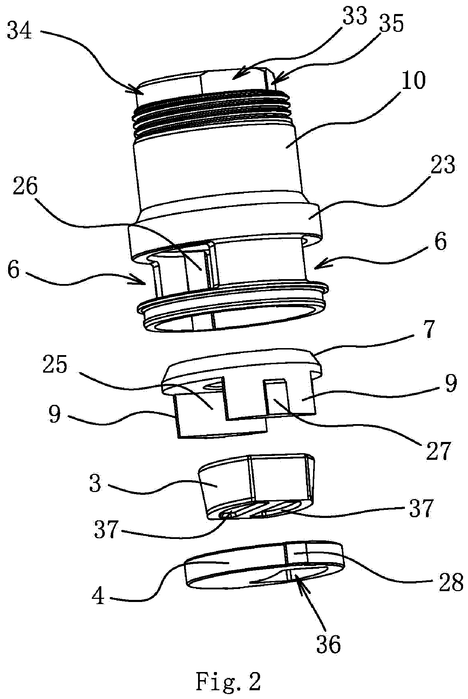

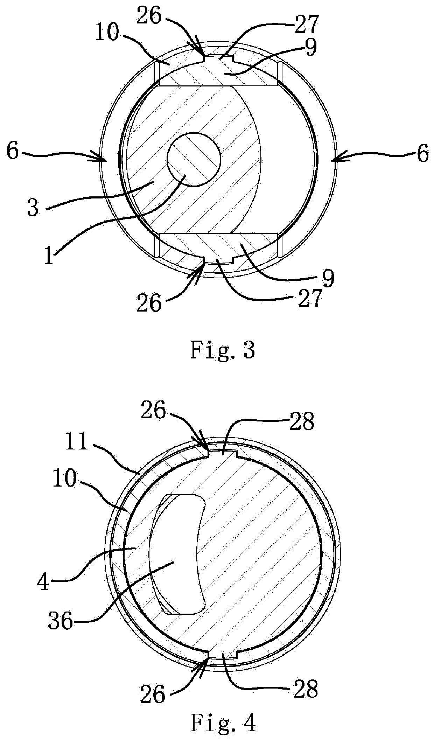

The guiding element 7 is adjacent to the metal gasket 15 and is located on a lower side of the metal gasket 15. An annular concave mounting groove 31 is formed in a top surface of the guiding element 7. A annular elastic element 29 is arranged in the mounting groove 31. A top of the elastic element 29 extends out of the mounting groove 31, and two ends of the elastic element 29 are abutted against an abutting part of the mounting groove 31 and a lower end surface of the metal gasket 15 respectively. As shown in conjunction with Fig. 2 and Fig. 3, convex blocky limiting blocks 27 are arranged on an outer side of the guiding element 7. Limiting grooves 26 which are recessed and elongated and are formed in the inner wall of the barrel 2. A length of each limiting groove 26 is set in an axial direction of the barrel 2. The limiting blocks 27 and the limiting grooves 26 correspond one-to-one. The limiting blocks 27 extend into the corresponding limiting grooves 26 respectively and are capable of sliding in the limiting grooves 26, so that the guiding element 7 is capable of sliding axially while being fixed in the barrel 2 in a circumferential direction. In one embodiment, an elastic sealing ring, such as an O-shaped ring, made of rubber or silica gel material is selected as the elastic element 29.

As shown in Fig. 2, two protruding guiding parts 9 are arranged at an end of the guiding element 7 facing the movable ceramic chip 3, and are located on two opposite sides of the guiding element 7, and a sliding groove 25 is formed between the two guiding parts 9. Opposite side surfaces of the two guiding parts 9 are both planes. Two ends of the sliding groove 25 are respectively directly opposite to positions of the two second water passage holes 6 formed in two sides of the barrel 2 in the penetrating manner. The movable ceramic chip 3 is located in the sliding groove 25 and is capable of moving back and forth along the sliding groove 25. In one embodiment, a width in the radial direction of the movable ceramic chip 3 is smaller than an inner diameter of the barrel 2, and side surfaces of the movable ceramic chip 3 facing the two guiding parts 9 are both planes, so that the movable ceramic chip 3 can be guided by the guiding parts 9 to move radially along the barrel 2. Two concave indentations 37 are formed in a bottom of the movable ceramic chip 3 to reduce contact surfaces between the movable ceramic chip 3 and the static ceramic chip 4, thus reducing friction.

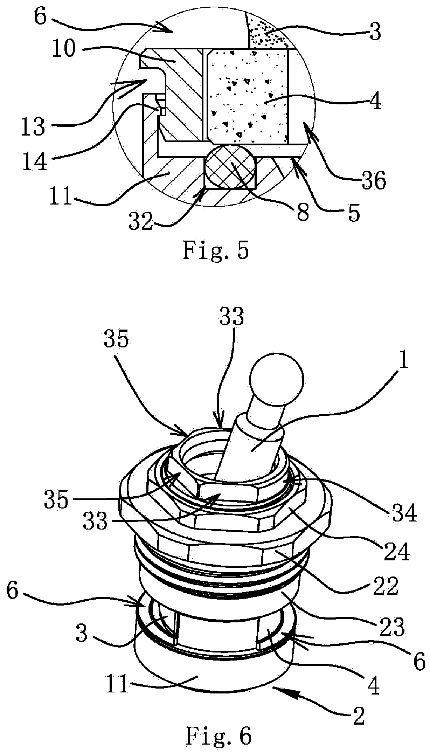

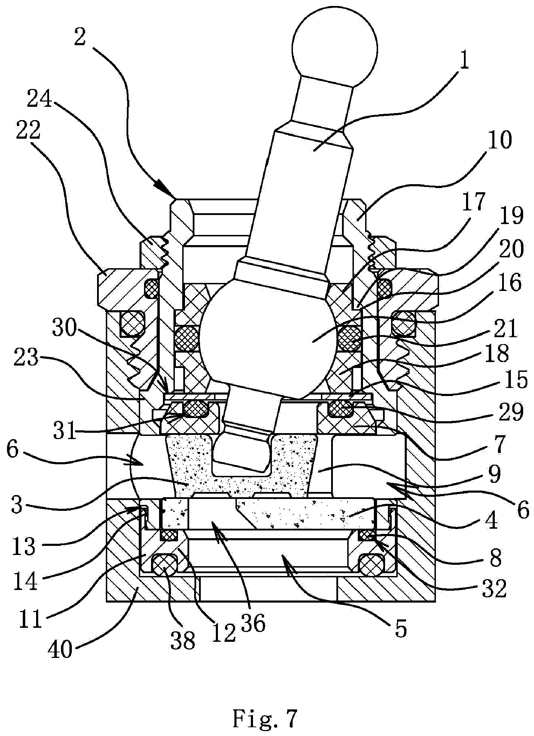

As shown in Fig. 1, the barrel 2 is of a split structure and includes a main body 10 and a base 11 which are cylindrical shaped and coaxially arranged. The above parts such as the first ball seat 17, the sealing ring 21, the second ball seat 18, the metal gasket 15, the guiding element 7, the movable ceramic chip 3 and the static ceramic chip 4 are all located in the main body 10. As shown in conjunction with Fig. 5, an upper end of the base 11 is sleeved on an outer side of a bottom end of the main body 10. An annular concave clamping slot 13 is formed in an outer side surface of the bottom end of the main body 10. A convex clamping part 14 is arranged on an inner side of the upper end of the base 11, and is inserted in the clamping slot 13. A lower side wall of the clamping slot 13 is a convex ring. An inner side surface of the clamping part 14 is in an interference fit with an outer side surface of the convex ring. An axial length of the clamping part 14 is shorter than an axial length of the clamping slot 13. Spacing exists between the clamping part 14 and the convex ring when an end surface of the bottom end of the main body 10 is abutted against an end surface of a blocking part 12. A bottom sealing ring 38 is arranged on a bottom surface of the base 11, so that when the switch valve core is not mounted in a tap body 40, the base 11 can move axially relative to the main body 10. After mounting, as shown in Fig. 7, the base 11 is moved upward by relying on a structure of the tap body 40 so that the base 11 and the main body 10 are pressed tightly. The compressibility of the bottom sealing ring 38 is utilized to enable the base 11 to move downward to avoid over extrusion of a sealing element 8 from affecting the sealing performance.

The convex annular blocking part 12 is arranged on an inner side of a lower end of the base 11. An end surface of a lower end of the main body 10 and the upper end surface of the blocking part 12 are both planes and are capable of being abutted against each other. An annular concave sealing groove 32 is further formed in the upper end surface of the blocking part 12, and the sealing element 8 is arranged in the sealing groove 32. The sealing element 8 is capable of partially extending out of the sealing groove 32 and is abutted against a lower end surface of the static ceramic chip 4. In one embodiment, an elastic sealing ring, such as an O-shaped ring, is selected as the sealing element 8. As shown in conjunction with Fig. 2 and Fig. 4, protruding blocky convex blocks 28 are arranged on an outer side surface of the static ceramic chip 4. The convex blocks 28 and the limiting grooves 26 correspond one-to-one, the convex blocks 28 extend into the corresponding limiting grooves 26 in the inner wall of the barrel 2 corresponding and are capable of sliding in the limiting grooves 26, so that the static ceramic chip 4 is capable of sliding axially while being fixed to the barrel 2 in the circumferential direction. The two limiting grooves 26, two limiting blocks 27 and two convex blocks 28 are arranged. The limiting grooves 26 are formed in two opposite sides in the barrel 2, and the limiting blocks 27 and convex blocks 28 are all arranged corresponding to the limiting grooves 26.

In addition, as shown in Fig. 6, two operating planes 33 which are both planar are arranged on two opposite sides of the top of the barrel 2. In two outer side surfaces of the barrel at the top of the barrel 2 located between the two operating planes 33, one is an arc-shaped surface 34, and the other is two inclined planes 35, so that an outer side of the top of the barrel 2 can be used for a tool gripping operation, and can also play a pointing role because of an asymmetry. As shown in Fig. 1 and Fig. 6, an upper end of the valve rod 1 is deflected towards the arc-shaped surface 34, indicating that the slide switch valve core is in a closed state. A tubular pressing cap 22 is sleeved on an outer side of the barrel 2. A convex annular limiting part 23 is arranged on an outer side of a middle part of the barrel 2. A locking cap 24 is in a threaded connection to the outer side of the top of the barrel 2. Two ends of the pressing cap 22 can be respectively abutted against the locking cap 24 and the limiting part 23.

When the slide switch valve core is connected, one of the first water passage hole 5 and the second water passage holes 6 is selected as an inlet and the other as an outlet according to actual needs. In other words, at least one of the two second water passage holes 6 is the inlet and the first water passage hole 5 is the outlet correspondingly, or at least one of the two second water passage holes 6 is the outlet and the first water passage hole 5 is the inlet correspondingly.

During use, the valve rod 1 is swung around the ball part 16 to drive the movable ceramic chip 3 to slide relative to the static ceramic chip 4 along the sliding groove 25, causing the movable ceramic chip 3 to leave a through hole 36 eccentrically formed in the static ceramic chip 4, so that the first water passage hole 5 communicates with the second water passage holes 6 through the through hole 36 in the static ceramic chip 4, and water can be discharged. Conversely, the movable ceramic chip 3 seals the through hole 36, so that the water is stopped from being discharged.

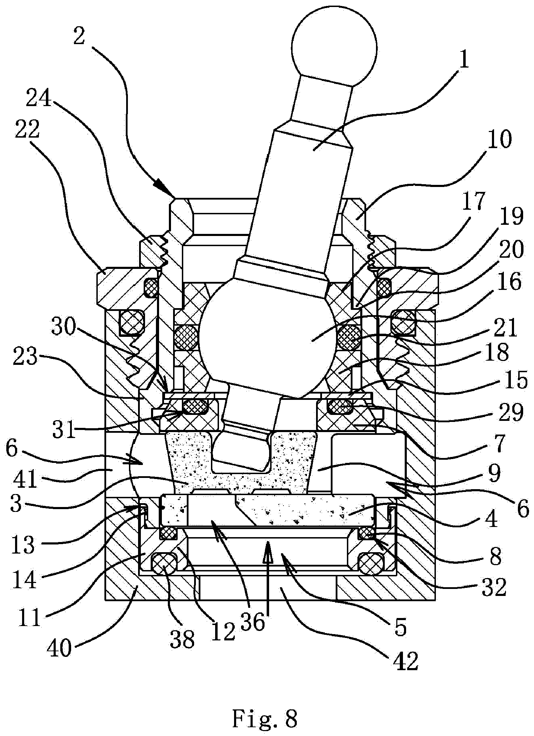

If the first water passage hole 5 in the bottom of the barrel 2 is selected as the inlet, as shown in Fig. 8, a water inlet 42 is formed in a bottom of the tap body 40. A water outlet 41 is formed in a side of the tap body 40. The water inlet 42 is opposite to the first water passage hole 5. The water outlet 41 is opposite to one of the second water passage holes 6. As the water flows upward, the static ceramic chip 4, the movable ceramic chip 3 and the guiding element 7 will move axially upward to a small extent due to the action of a water pressure and elasticity of the elastic element 29. The sealing element 8 on the blocking part 12 is reduced in compression and expands to remain abutted against the lower end surface of the static ceramic chip 4, so that the static ceramic chip 4, the movable ceramic chip 3 and the guiding element 7 are closely abutted inside as a whole, and sealing is provided for a lower side of the whole.

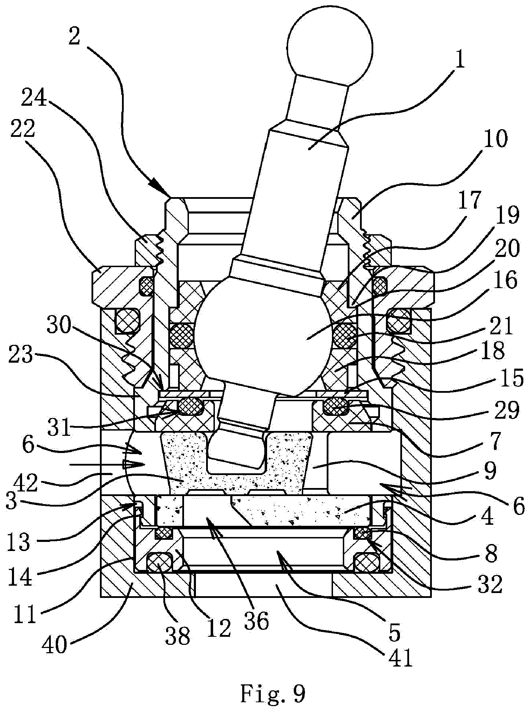

If the second water passage holes 6 in the side of the barrel 2 are selected as the inlets, as shown in Fig. 9, a water outlet 41 is formed in the bottom of the tap body 40. A water inlet 42 is formed in the side of the tap body 40. The water outlet 41 is opposite to the first water passage hole 5. The water inlet 42 is opposite to one of the second water passage holes 6. As the water flows downward, the static ceramic chip 4 moves axially downward under the action of a water pressure. The movable ceramic chip 3 and the guiding element 7 move axially downward instantly along with the static ceramic chip 4 under the action of the elasticity of the elastic element 29. Resisted by the sealing element 8 and the bottom sealing ring 38, the static ceramic chip 4, the movable ceramic chip 3 and the guiding element 7 move downward to a small extent, so that the whole of the static ceramic chip 4, the movable ceramic chip 3 and the guiding element 7 is kept in a close abutted state to further ensure the sealing performance.

### Embodiment 2

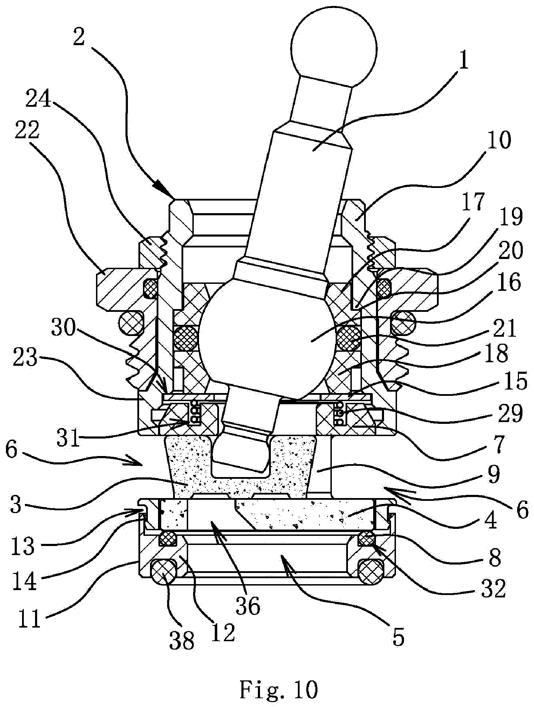

As shown in Fig. 10, the elastic element 29 is a part having elasticity such as a spring. The spring is cylindrical. An annular mounting groove 31 is formed in a top surface of the guiding element 7. The spring is located in the mounting groove 31. Upper and lower ends of the spring are respectively pressed on the metal gasket 15 and the guiding element 7. Other structures are the same as those in Embodiment 1.

### Embodiment 3

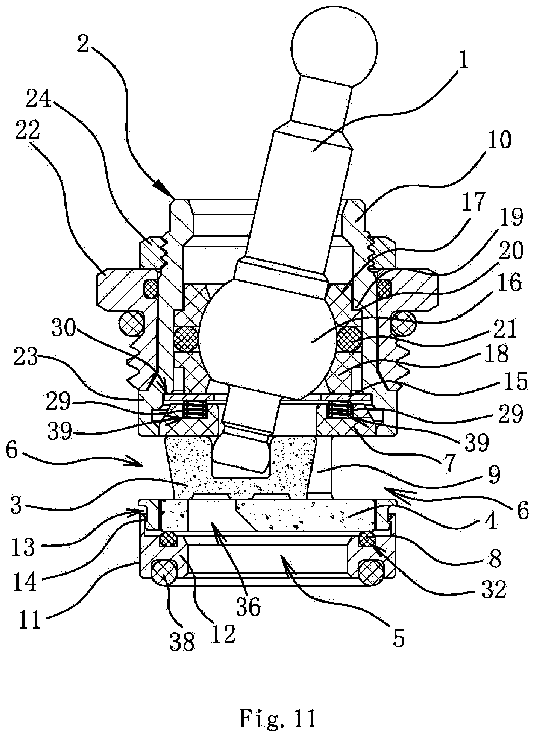

As shown in Fig. 11, the elastic element 29 is a spring or a rubber block. The spring or the rubber block is cylindrical. A plurality of elastic elements 29 are uniformly arrayed in a circumferential direction. Mounting holes 39 in one-to-one correspondence with the elastic elements 29 are formed in a top surface of the guiding element 7. The elastic elements 29 are mounted in the corresponding mounting holes 39. Upper and lower ends of the elastic elements 29 are respectively pressed on the metal gasket 15 and the guiding element 7. Other structures are the same as those in Embodiment 1.

### Referenced parts

1, valve rod; 2, barrel; 3, movable ceramic chip; 4, static ceramic chip; 5, first water passage hole; 6, second water passage hole; 7, guiding element; 8, sealing element; 9, guiding part; 10, main body; 11, base; 12, blocking part; 13, clamping slot; 14, clamping part; 15, metal gasket; 16, ball part; 17, first ball seat; 18, second ball seat; 19, blocking shoulder; 20, abutting surface; 21, sealing ring; 22, pressing cap; 23, limiting part; 24, locking cap; 25, sliding groove; 26, limiting groove; 27, limiting block; 28, convex block; 29, elastic element; 30, step surface; 31, mounting groove; 32, sealing groove; 33, operating plane; 34, arc-shaped surface; 35, inclined plane; 36, through hole; 37, indentation; 38, bottom sealing ring; 39, mounting hole; 40, tap body; 41, water outlet; and 42, water inlet.

## Claims

1. A slide switch valve core, comprising: a valve rod (1), a barrel (2), and a movable ceramic chip (3) and a static ceramic chip (4) which are arranged in the barrel (2) in an up-down jointing manner, wherein a first water passage hole (5) is formed in a bottom of the barrel (2), a second water passage hole (6) is formed in a side of the barrel (2), and the valve rod (1) is capable of driving the movable ceramic chip (3) to slide relative to the static ceramic chip (4) and enable the first water passage hole (5) to communicate with the second water passage hole (6); **characterized in that**, an annular guiding element (7) which is capable of moving axially is radially fixed in the barrel (2), the guiding element (7) is located at an upper part of the movable ceramic chip (3), and is capable of guiding the movable ceramic chip (3) to slide relative to the static ceramic chip (4); a sealing element (8) is arranged between a lower end of the static ceramic chip (4) and the barrel (2); and at least one elastic element (29) is arranged between an upper end of the guiding element (7) and the barrel (2).

2. The slide switch valve core according to claim 1, **characterized in that** the at least one elastic element (29) is set as a ring along a circumferential direction of the guiding element (7), an annular concave mounting groove (31) is formed in a top surface of the guiding element (7), the at least one elastic element (29) is located in the mounting groove (31), and a top of the at least one elastic element (29) extends out of the mounting groove (31).

3. The slide switch valve core according to claim 1, **characterized in that** a plurality of the at least one elastic element (29) are uniformly arrayed in a circumferential direction of the guiding element (7), a plurality of mounting holes (39) which are uniformly arrayed in the circumferential direction of the guiding element (7) are formed in a top surface of the guiding element (7), the plurality of elastic elements (29) are located in the mounting holes (39) in a one-to-one correspondence manner, and tops of the plurality of elastic elements (29) extend out of the mounting holes (39).

4. The slide switch valve core according to claim 1, **characterized in that** the at least one elastic element (29) is an elastic sealing ring or a rubber block or a spring.

5. The slide switch valve core according to claim 1 **characterized in that** an annular metal gasket (15) is further arranged in the barrel (2), a top end of the metal gasket (15) is abutted against an inner wall of the barrel (2), and a top of the at least one elastic element (29) is abutted against a bottom end of the metal gasket (15).

6. The slide switch valve core according to any one of claims 1-5, **characterized in that** at least one limiting groove (26) which is recessed and elongated and is formed in an inner wall of the barrel (2), a length of the at least one limiting groove (26) is set along an axial direction of the barrel (2), at least one convex limiting block (27) is arranged on an outer side of the guiding element (7), and the at least one limiting block (27) extends into the at least one limiting groove (26) and is capable of sliding in the at least one limiting groove (26).

7. The slide switch valve core according to claim 6, **characterized in that** at least one protruding convex block (28) is arranged on an outer side of the static ceramic chip (4), and the at least one convex block (28) extends into the at least one limiting groove (26) and is capable of sliding in the at least one limiting groove (26).

8. The slide switch valve core according to any one of claims 1-5, **characterized in that** the barrel (2) comprises a main body (10) and a base (11) which are tubular shaped and coaxially arranged, a top end of the base (11) is sleeved on an outer side of a bottom end of the main body (10), a convex annular blocking part (12) is arranged on an inner side surface of the base (11), an end surface of the bottom end of the main body (10) is capable of abutting against an end surface of the blocking part (12), and the sealing element (8) is arranged between the static ceramic chip (4) and the blocking part (12).

9. The slide switch valve core according to claim 8, **characterized in that** an annular concave clamping slot (13) is formed in an outer side surface of the bottom end of the main body (10), a convex clamping part (14) which is located above the blocking part (12) is arranged on the inner side surface of the base (11), and is inserted in the clamping slot (13), and an axial length of the clamping part (14) is shorter than an axial length of the clamping slot (13).

10. The slide switch valve core according to claim 8, **characterized in that** an annular concave sealing groove (32) is formed in an upper end surface of the blocking part (12), the sealing element (8) is located in the sealing groove (32), and a top of the sealing element (8) is abutted against the static ceramic chip (4).

11. The slide switch valve core according to claim 5, **characterized in that** a bottom end of the valve rod (1) penetrates through the metal gasket (15) and the guiding element (7) and acts on the movable ceramic chip (3), a spherical ball part (16) is arranged at a middle part of the valve rod (1), and the bottom end of the valve rod (1) and the ball part (16) are respectively located on two sides of the metal gasket (15).

12. The slide switch valve core according to claim 11, **characterized in that** a first ball seat (17) and a second ball seat (18) are both annular, are both arranged in the barrel (2), are both sleeved on an outer side of the valve rod (1), and are respectively arranged on two sides of the ball part (16); and a space exists between an outer side of the ball part (16) and the inner wall of the barrel (2), inner side surfaces of the first ball seat (17) and the second ball seat (18) are both abutted against the ball part (16), and outer side surfaces of the first ball seat (17) and the second ball seat (18) are both abutted against the inner wall of the barrel (2).

13. The slide switch valve core according to claim 12, **characterized in that** the first ball seat (17) is located above the second ball seat (18), portions of the inner side surfaces of the first ball seat (17) and the second ball seat (18) facing the ball part (16) are both spherical, and mate with an outer surface of the ball part (16); and a convex blocking shoulder (19) is further arranged on the inner wall of the barrel (2), an abutting surface (20) which is capable of abutting against a lower end surface of the blocking shoulder (19) is arranged on an outer side of the first ball seat (17), a lower end surface of the second ball seat (18) is abutted against a top surface of the metal gasket (15), an annular sealing ring (21) is arranged between the first ball seat (17) and the second ball seat (18), and two sides of the sealing ring (21) are respectively abutted against the first ball seat (17) and the second ball seat (18).

14. The slide switch valve core according to any one of claims 1-5, **characterized in that** a position of the second water passage hole (6) is opposite to that of the movable ceramic chip (3).

15. The slide switch valve core according to any one of claims 1-5, **characterized in that** the guiding element (7) is fixed in the barrel (2) in a circumferential direction, two protruding guiding parts (9) are arranged at a lower end of the guiding element (7), and are located on two opposite sides of the guiding element (7), a sliding groove (25) is formed between the two guiding parts (9), and the movable ceramic chip (3) is located in the sliding groove (25) and is capable of moving back and forth along the sliding groove (25).
